# EUROPEAN PATENT APPLICATION

(11) **EP 4 625 865 A1**
(43) Date of publication of application: **01.10.2025**
(21) Application number: 23893660.3
(22) Date of filing: 13.11.2023
(51) Int. Cl.: H04L 5/00

(54) **METHOD AND APPARATUS USED IN NODE FOR WIRELESS COMMUNICATION**

(30) Priority: 23.11.2022 CN 202211475659
(71) Applicant: Apogee Networks, LLC, Dallas, TX 75201 (US)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/131168
(87) International publication number: WO 2024/109570

(57) **Abstract**

The present application discloses a method and apparatus used in a node for wireless communication. A node first receives a first information block, the first information block being used for configuring a first semi-persistent transmission, and the first semi-persistent transmission corresponding to a first codeword and a second codeword; and then the node receives first signaling, the first signaling being used for releasing scheduling corresponding to at least one of the first codeword and the second codeword corresponding to the first semi-persistent transmission, the first signaling comprising a first domain set and a second domain set, the first domain set and the second domain set respectively corresponding to the first codeword and the second codeword, the first domain set and the second domain set being respectively used for PDCCH validation for scheduling release of the first codeword and the second codeword, and at least one domain in the first domain set not belonging to the second domain set. According to the present application, the validation mode of semi-persistent transmission of a terminal is improved, thereby improving the system performance.

## Description

### Technical Field

The present application relates to a transmission method and apparatus in a wireless communication system, in particular to a transmission scheme and apparatus for semi-persistent scheduling in wireless communication.

### Background Art

A 5G wireless cellular communication network system (5G-RAN) enhances a grant free transmission mode of UE (User Equipment) based on original LTE (Long-Term Evolution). A downlink SPS (Semi-Persistent) transmission is achieved in a mode of RRC (Radio Resource Control) configuration combined with PDCCH (Physical Downlink Control Channel) activation, while an uplink configured grant supports two modes of RRC configuration (Type 1) and RRC configuration combined with PDCCH activation (Type 2). In a design of NR Rel-16, a plurality of downlink/uplink grant free scheduling configurations are further supported to be activated/released by the same PDCCH, so as to further improve efficiency.

In the discussion of NR R17 and R18, the scenario of configuring a plurality of panels at a terminal side has been accepted, and meanwhile the transmission mode of sending a plurality of CWs (Codewords) at the terminal side is also supported. In turn, the impact of the introduction of the above-mentioned new scheme on the configured grant transmission also needs to be considered accordingly.

### Summary of the Invention

For a future R18 system, the sending of the terminal is enhanced. One important aspect is the introduction of two panels. The terminal can use two panels to perform the sending on two sending beams at the same time to obtain better spatial diversity/multiplexing gains, and the above-mentioned transmission mode can also be used in an uplink configured grant transmission. Meanwhile, the terminal can also receive the transmission of two codewords for one SPS configuration from a base station by two panels at the same time. How to optimize the activation and release modes of the existing SPS and configured grant will be a problem that needs to be considered.

In view of the problem of semi-persistent scheduling in the above-mentioned multi-panel scenario, the present application discloses a solution. It should be explained that in the description of the present application, a two-codeword transmission is only used as one typical application scenario or example; and the present application is also applicable to other scenarios in which similar problems are faced, for example, single-codeword transmission scenarios, or is directed at different technical fields, such as other technical fields other than PDCCH activation and release, for example, the measurement reporting field and other technical fields such as the uplink data transmission, so as to achieve similar technical effects. In addition, the use of a unified solution for different scenarios (including but not limited to a two-codeword scenario) also facilitates the reduction of hardware complexity and costs. In the absence of conflicts, the embodiments in any node of the present application and the features in the embodiments can be applied to any other node. In the absence of conflicts, the embodiments of the present application and the features in the embodiments can be arbitrarily combined with each other. In particular, the interpretation of the terminologies, nouns, functions, and variables in the present application (if not specifically stated) can refer to the definitions in the 3GPP specification protocols TS36 series, TS38 series, and TS37 series. If necessary, reference may be made to 3GPP standards TS38.211, TS38.212, TS38.213, TS38.214, TS38.215, TS38.321, TS38.331, TS38.305, and TS37.355 to assist in understanding the present application.

The present application discloses a method used for a first node in wireless communication, comprising:
receiving a first information block, the first information block being used for configuring a first semi-persistent transmission, and the first semi-persistent transmission corresponding to a first codeword and a second codeword; and
receiving first signaling, the first signaling being used for releasing scheduling corresponding to at least one of the first codeword and the second codeword corresponding to the first semi-persistent transmission,
wherein the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the above-mentioned method is characterized in that: when a terminal supports a semi-persistent transmission of two codewords, the two codewords can be released independently to ensure transmission flexibility.

According to one aspect of the present application, PDCCH validation for scheduling release of a codeword corresponding to the first signaling depends on at least one of a value of the first domain set in the first signaling or a value of the second domain set in the first signaling.

According to one aspect of the present application, only one of the PDCCH validation for the scheduling release of the first codeword corresponding to the first semi-persistent transmission and the PDCCH validation for the scheduling release of the second codeword corresponding to the first semi-persistent transmission is achieved; when the PDCCH validation for the scheduling release of the first codeword corresponding to the first semi-persistent transmission is achieved, the first node validates that the first signaling is used for releasing the scheduling corresponding to the first codeword corresponding to the first semi-persistent transmission; and when the PDCCH validation for the scheduling release of the second codeword corresponding to the first semi-persistent transmission is achieved, the first node validates that the first signaling is used for releasing the scheduling corresponding to the second codeword corresponding to the first semi-persistent transmission.

According to one aspect of the present application, the first information block comprises a first information sub-block set, and the first information sub-block set is simultaneously applied to the transmission of the first codeword and the transmission of the second codeword; and the first information sub-block set comprises a first information sub-block, and the first information sub-block is used for determining one of a number of HARQ processes or resource configuration information.

As one embodiment, the above-mentioned method is characterized in that: the first codeword and the second codeword share part of RRC configuration information to reduce signaling overhead and improve spectrum efficiency.

According to one aspect of the present application, the first semi-persistent transmission configured by the first information block is associated with a first index; the first domain set comprises a first domain, and the second domain set comprises a second domain; and the first domain and the second domain in the first signaling are simultaneously used for determining the first index.

As one embodiment, the above-mentioned method is characterized in that: the first semi-persistent transmission corresponds to the first index to reduce signaling overhead and improve efficiency.

According to one aspect of the present application, the first semi-persistent transmission configured by the first information block is associated with a first index; the first domain set comprises a first domain, and the second domain set comprises a second domain; and only one domain of the first domain and the second domain in the first signaling is used for determining the first index.

As one embodiment, the above-mentioned method is characterized in that: the second domain included in the first signaling can be used for other functions, thereby improving the robustness and transmission efficiency of the PDCCH.

According to one aspect of the present application, a first index set and a second index set both comprise the first index, the first index set corresponds to the transmission of the first codeword, the second index set corresponds to the transmission of the second codeword, and the first index set and the second index set are independently configured, respectively.

As one embodiment, the above-mentioned method is characterized in that: for two codewords, a list of jointly activated/released grant free transmissions is independently configured to improve the efficiency of signaling transmission.

According to one aspect of the present application, the method comprises:
abandoning receiving at least one of a first signal and a second signal,
wherein the first semi-persistent transmission configured by the first information block comprises the first signal and the second signal, the first signal corresponds to the first codeword, and the second signal corresponds to the second codeword; when the first signaling is used for releasing the scheduling corresponding to only the second codeword in the first codeword and the second codeword corresponding to the first semi-persistent transmission, the first node receives the first signal and abandons receiving the second signal; and when the first signaling is used for releasing the scheduling corresponding to the first codeword and the scheduling corresponding to the second codeword corresponding to the first semi-persistent transmission, the first node abandons receiving the first signal and abandons receiving the second signal.

According to one aspect of the present application, the method comprises:
abandoning sending at least one of a first signal and a second signal,
wherein the first semi-persistent transmission configured by the first information block comprises the first signal and the second signal, the first signal corresponds to the first codeword, and the second signal corresponds to the second codeword; when the first signaling is used for releasing the scheduling corresponding to only the second codeword in the first codeword and the second codeword corresponding to the first semi-persistent transmission, the first node sends the first signal and abandons sending the second signal; and when the first signaling is used for releasing the scheduling corresponding to the first codeword and the scheduling corresponding to the second codeword corresponding to the first semi-persistent transmission, the first node abandons sending the first signal and abandons sending the second signal.

According to one aspect of the present application, the method comprises:
receiving second signaling, the second signaling being used for activating the scheduling corresponding to the first codeword and the scheduling corresponding to the second codeword corresponding to the first semi-persistent transmission,
wherein the second signaling comprises a third domain and a fourth domain, the third domain included in the second signaling and one domain in the first domain set are a same type of domains, and the fourth domain included in the second signaling and one domain in the second domain set are a same type of domains; and one of the third domain or the fourth domain is used for PDCCH validation for common scheduling activation of the first codeword and the second codeword.

As one embodiment, the above-mentioned method is characterized in that: when one semi-persistent transmission supporting two codewords is activated, both codewords are activated to simplify the implementation.

The present application discloses a method used for a second node in wireless communication, comprising:
sending a first information block, the first information block being used for configuring a first semi-persistent transmission, and the first semi-persistent transmission corresponding to a first codeword and a second codeword; and
sending first signaling, the first signaling being used for releasing scheduling corresponding to at least one of the first codeword and the second codeword corresponding to the first semi-persistent transmission,
wherein the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

According to one aspect of the present application, the PDCCH validation for the scheduling release of the codeword corresponding to the first signaling depends on at least one of a value of the first domain set in the first signaling or a value of the second domain set in the first signaling.

According to one aspect of the present application, only one of the PDCCH validation for the scheduling release of the first codeword corresponding to the first semi-persistent transmission and the PDCCH validation for the scheduling release of the second codeword corresponding to the first semi-persistent transmission is achieved; a recipient of the first signaling comprises a first node; when the PDCCH validation for the scheduling release of the first codeword corresponding to the first semi-persistent transmission is achieved, the first node validates that the first signaling is used for releasing scheduling corresponding to the first codeword corresponding to the first semi-persistent transmission; and when the PDCCH validation for the scheduling release of the second codeword corresponding to the first semi-persistent transmission is achieved, the first node validates that the first signaling is used for releasing scheduling corresponding to the second codeword corresponding to the first semi-persistent transmission.

According to one aspect of the present application, the first information block comprises a first information sub-block set, and the first information sub-block set is simultaneously applied to the transmission of the first codeword and the transmission of the second codeword; and the first information sub-block set comprises a first information sub-block, and the first information sub-block is used for determining one of a number of HARQ processes or resource configuration information.

According to one aspect of the present application, the first semi-persistent transmission configured by the first information block is associated with a first index; the first domain set comprises a first domain, and the second domain set comprises a second domain; and the first domain and the second domain in the first signaling are simultaneously used for determining the first index.

According to one aspect of the present application, the first semi-persistent transmission configured by the first information block is associated with a first index; the first domain set comprises a first domain, and the second domain set comprises a second domain; and only one domain of the first domain and the second domain in the first signaling is used for determining the first index.

According to one aspect of the present application, a first index set and a second index set both comprise the first index, the first index set corresponds to the transmission of the first codeword, the second index set corresponds to the transmission of the second codeword, and the first index set and the second index set are independently configured, respectively.

According to one aspect of the present application, the method comprises:
abandoning sending at least one of a first signal and a second signal,
wherein the first semi-persistent transmission configured by the first information block comprises the first signal and the second signal, the first signal corresponds to the first codeword, and the second signal corresponds to the second codeword; a recipient of the first signaling comprises a first node; when the first signaling is used for releasing the scheduling corresponding to only the second codeword in the first codeword and the second codeword corresponding to the first semi-persistent transmission, the first node sends the first signal and abandons sending the second signal; and when the first signaling is used for releasing the scheduling corresponding to the first codeword and the scheduling corresponding to the second codeword corresponding to the first semi-persistent transmission, the first node abandons sending the first signal and abandons sending the second signal.

According to one aspect of the present application, the method comprises:
abandoning receiving at least one of a first signal and a second signal,
wherein the first semi-persistent transmission configured by the first information block comprises the first signal and the second signal, the first signal corresponds to the first codeword, and the second signal corresponds to the second codeword; a recipient of the first signaling comprises a first node; when the first signaling is used for releasing the scheduling corresponding to only the second codeword in the first codeword and the second codeword corresponding to the first semi-persistent transmission, the first node receives the first signal and abandons receiving the second signal; and when the first signaling is used for releasing the scheduling corresponding to the first codeword and the scheduling corresponding to the second codeword corresponding to the first semi-persistent transmission, the first node abandons receiving the first signal and abandons receiving the second signal.

According to one aspect of the present application, the method comprises:
sending second signaling, the second signaling being used for activating the scheduling corresponding to the first codeword and the scheduling corresponding to the second codeword corresponding to the first semi-persistent transmission,
wherein the second signaling comprises a third domain and a fourth domain, the third domain included in the second signaling and one domain in the first domain set are a same type of domains, and the fourth domain included in the second signaling and one domain in the second domain set are a same type of domains; and one of the third domain or the fourth domain is used for PDCCH validation for common scheduling activation of the first codeword and the second codeword.

The present application discloses a first node used for wireless communication, comprising:
a first receiver for receiving a first information block, the first information block being used for configuring a first semi-persistent transmission, and the first semi-persistent transmission corresponding to a first codeword and a second codeword; and
a first transceiver for receiving first signaling, the first signaling being used for releasing scheduling corresponding to at least one of the first codeword and the second codeword corresponding to the first semi-persistent transmission,
wherein the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

The present application discloses a second node used for wireless communication, comprising:
a first transmitter for sending a first information block, the first information block being used for configuring a first semi-persistent transmission, and the first semi-persistent transmission corresponding to a first codeword and a second codeword; and
a second transceiver for sending first signaling, the first signaling being used for releasing scheduling corresponding to at least one of the first codeword and the second codeword corresponding to the first semi-persistent transmission,
wherein the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the benefit of the scheme in the present application lies in the optimization of the release/activation modes of grant free scheduling supporting the transmission of two codewords, the improvement of flexibility, the avoidance of resource waste, and the improvement of performance.

### Brief Description of the Drawings

Other features, purposes, and advantages of the present application will become more apparent by reading the detailed description of the non-limiting embodiments with reference to the following figures:
FIG. 1 shows a processing flow chart of a first node according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a flow chart of a first signaling according to one embodiment of the present application;
FIG. 6 shows a flow chart of first signaling according to another embodiment of the present application;
FIG. 7 shows a flow chart of second signaling according to one embodiment of the present application;
FIG. 8 shows a schematic diagram of a first signaling according to one embodiment of the present application;
FIG. 9 shows a schematic diagram of a first information block according to one embodiment of the present application;
FIG. 10 shows a schematic diagram of a first node according to one embodiment of the present application;
FIG. 11 shows a schematic diagram of an antenna port and an antenna port group according to one embodiment of the present application;
FIG. 12 shows a structural block diagram of a processing apparatus in a first node device according to one embodiment of the present application; and
FIG. 13 shows a structural block diagram of a processing apparatus in a second node device according to one embodiment of the present application.

### Detailed Description of Embodiments

The technical solution of the present application will be further described in detail below in conjunction with the accompanying drawings. It should be explained that in the absence of conflicts, the embodiments of the present application and the features in the embodiments can be arbitrarily combined with each other.

### Embodiment 1

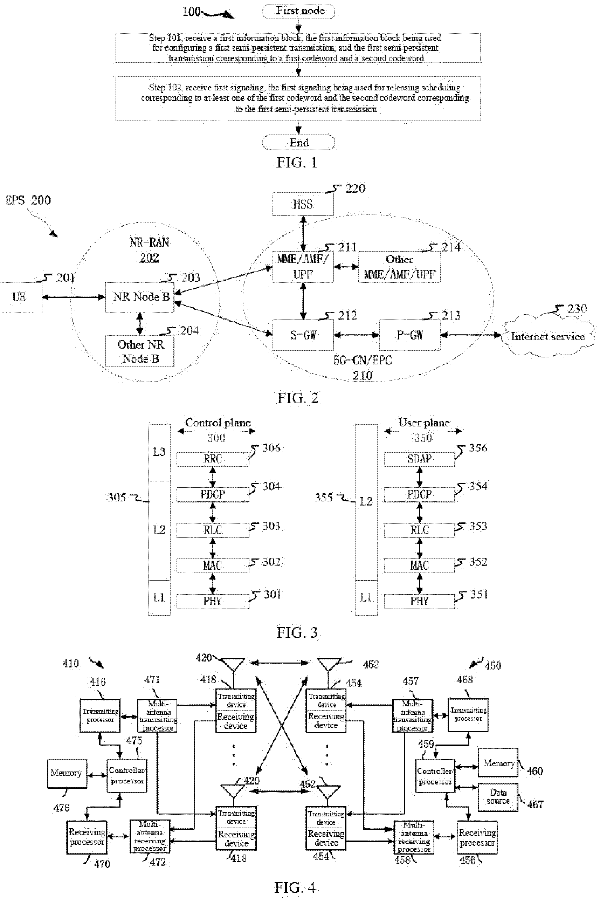

Embodiment 1 illustrates a processing flow chart of one first node, as shown in FIG. 1. In 100 shown in FIG. 1, each block represents one step. In Embodiment 1, the first node in the present application receives a first information block in step 101, the first information block is used for configuring a first semi-persistent transmission, and the first semi-persistent transmission corresponds to a first codeword and a second codeword; and first signaling is received in step 102, and the first signaling is used for releasing scheduling corresponding to at least one of the first codeword and the second codeword corresponding to the first semi-persistent transmission.

In Embodiment 1, the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the first information block is transmitted by RRC signaling.

As one embodiment, the first information block comprises one or more IEs (Information Elements) in TS 38.331.

As one embodiment, the first information block comprises one or more domains in SPS-Config IE in TS 38.331.

As one embodiment, the first information block comprises one or more domains in ConfiguredGrantConfig IE in TS 38.331.

As one embodiment, the name of RRC signaling used for transmitting the first information block comprises SPS (Semi-persistent Scheduling).

As one embodiment, the name of the RRC signaling used for transmitting the first information block comprises Configured Grant.

As one embodiment, the name of the RRC signaling used for transmitting the first information block comprises Config.

As one embodiment, the first semi-persistent transmission corresponds to a plurality of downlink transmissions (DL Transmissions).

As one embodiment, the first semi-persistent transmission corresponds to a plurality of uplink transmissions (UL Transmissions).

As one embodiment, the first semi-persistent transmission corresponds to a plurality of PDSCHs (Physical Downlink Shared Channels).

As one embodiment, the first semi-persistent transmission corresponds to a plurality of PUSCHs (Physical Uplink Shared Channels).

As one embodiment, the first semi-persistent transmission corresponds to a first index, and the first index is used for identifying the first semi-persistent transmission.

As one embodiment, the first semi-persistent transmission corresponds to one SPS-ConfigIndex.

As one embodiment, the first semi-persistent transmission corresponds to one configuredGrantConfigIndex.

As one embodiment, the first semi-persistent transmission corresponds to one configuredGrantConfigIndexMAC.

As one embodiment, the first semi-persistent transmission does not comprise dynamic scheduling.

As one embodiment, the first semi-persistent transmission does not comprise a dynamic grant.

As one embodiment, the first codeword corresponds to Codeword 1.

As one embodiment, the second codeword corresponds to Codeword 2.

As one embodiment, the first codeword corresponds to the transmission of one or more TBs (Transport Blocks).

As one embodiment, the second codeword corresponds to the transmission of one or more TBs.

As one embodiment, the first codeword is associated with a first reference signal resource set, and the second codeword is associated with a second reference signal resource set.

As one sub-embodiment of this embodiment, the first reference signal resource set and the second reference signal resource set are different.

As one sub-embodiment of this embodiment, the first reference signal resource set corresponds to one SRS (Sounding Reference Signal) resource set.

As one sub-embodiment of this embodiment, the second reference signal resource set corresponds to one SRS resource set.

As one sub-embodiment of this embodiment, the first reference signal resource set corresponds to one SRI (Sounding Reference Signal Resource Indicator).

As one sub-embodiment of this embodiment, the second reference signal resource set corresponds to one SRI.

As one sub-embodiment of this embodiment, the first reference signal resource set corresponds to one panel.

As one sub-embodiment of this embodiment, the second reference signal resource set corresponds to one panel.

As one sub-embodiment of this embodiment, the first reference signal resource set corresponds to one CSI-RS (Channel State Information Reference Signal) resource set.

As one sub-embodiment of this embodiment, the second reference signal resource set corresponds to one CSI-RS resource set.

As one sub-embodiment of this embodiment, the first reference signal resource set corresponds to one SSB (SS/PBCH Block, synchronization signal/physical broadcast channel block).

As one sub-embodiment of this embodiment, the second reference signal resource set corresponds to one SSB.

As one sub-embodiment of this embodiment, the first reference signal resource set comprises at least one SRS resource.

As one sub-embodiment of this embodiment, the second reference signal resource set comprises at least one SRS resource.

As one sub-embodiment of this embodiment, a wireless signal corresponding to the first codeword and at least one reference signal resource included in the first reference signal resource set are QCL (Quasi Co-located).

As one sub-embodiment of this embodiment, a wireless signal corresponding to the second codeword and at least one reference signal resource included in the second reference signal resource set are QCL.

As one embodiment, the first semi-persistent transmission corresponds to the first codeword and the second codeword.

As one embodiment, the first semi-persistent transmission comprises the wireless signal corresponding to the first codeword and the wireless signal corresponding to the second codeword.

As one embodiment, the first signaling comprises DCI (Downlink Control Information).

As one embodiment, a physical layer channel occupied by the first signaling comprises a PDCCH (Physical Downlink Control Channel).

As one embodiment, the first signaling comprises an MAC (Medium Access Control) CE (Control Element).

As one embodiment, CRC (Cyclic Redundancy Check) included in the first signaling is scrambled by CS-RNTI (Configured Grant Radio Network Temporary Identity).

As one embodiment, the CRC included in the first signaling is scrambled by SP-CSI-RNTI (Semi-persistent Channel State Information Radio Network Temporary Identity).

As one embodiment, the CRC included in the first signaling is scrambled by an RNTI other than C-RNTI (Cell Radio Network Temporary Identity).

As one embodiment, the first domain set and the second domain set both comprise a plurality of identical domains.

As one embodiment, the first domain set and the second domain set both comprise a plurality of identically named domains.

As one embodiment, the first domain set comprises one domain, and the second domain set comprises one domain.

As one embodiment, the first domain set comprises an HARQ (Hybrid Automatic Repeat reQuest) process number field, an RV (Redundancy Version) field, an MCS (Modulation and coding scheme) field, and an FDRA (Frequency Domain Resource Allocation) field.

As one embodiment, the second domain set comprises the HARQ process number field, the RV field, the MCS field, and the FDRA field.

As one embodiment, the first domain set comprises at least one of the HARQ process number field, the RV field, the MCS field, or the FDRA field.

As one embodiment, the second domain set comprises at least one of the HARQ process number field, the RV field, the MCS field, or the FDRA field.

As one embodiment, the first domain set comprises the RV field, the MCS field, and the FDRA field.

As one embodiment, the second domain set comprises the RV field, the MCS field, and the FDRA field.

As one embodiment, the first domain set comprises at least one of the RV field, the MCS field, or the FDRA field.

As one embodiment, the second domain set comprises at least one of the RV field, the MCS field, or the FDRA field.

As one embodiment, when the first semi-persistent transmission does not correspond to one SPS-ConfigIndex, the first domain set comprises the HARQ process number field; and when the first semi-persistent transmission corresponds to one SPS-ConfigIndex, the first domain set does not comprise the HARQ process number field.

As one embodiment, when the first semi-persistent transmission does not correspond to one SPS-ConfigIndex, the second domain set comprises the HARQ process number field; and when the first semi-persistent transmission corresponds to one SPS-ConfigIndex, the second domain set does not comprise the HARQ process number field.

As one embodiment, when the first semi-persistent transmission does not correspond to one configuredGrantConfigIndex, the first domain set comprises the HARQ process number field; and when the first semi-persistent transmission corresponds to one configuredGrantConfigIndex, the first domain set does not comprise the HARQ process number field.

As one embodiment, when the first semi-persistent transmission does not correspond to one configuredGrantConfigIndex, the second domain set comprises the HARQ process number field; and when the first semi-persistent transmission corresponds to one configuredGrantConfigIndex, the second domain set does not comprise the HARQ process number field.

As one embodiment, when the first semi-persistent transmission does not correspond to one configuredGrantConfigIndexMAC, the first domain set comprises the HARQ process number field; and when the first semi-persistent transmission corresponds to one configuredGrantConfigIndexMAC, the first domain set does not comprise the HARQ process number field.

As one embodiment, when the first semi-persistent transmission does not correspond to one configuredGrantConfigIndexMAC, the second domain set comprises the HARQ process number field; and when the first semi-persistent transmission corresponds to one configuredGrantConfigIndexMAC, the second domain set does not comprise the HARQ process number field.

As one embodiment, the meaning that the first domain set corresponds to the first codeword comprises: at least one domain in the first domain set is used for PDCCH validation of scheduling activation for the first codeword.

As one embodiment, the meaning that the first domain set corresponds to the first codeword comprises: the first domain set is used for PDCCH validation for scheduling release of the first codeword.

As one embodiment, the meaning that the second domain set corresponds to the second codeword comprises: at least one domain in the second domain set is used for PDCCH validation for scheduling activation of the second codeword.

As one embodiment, the meaning that the second domain set corresponds to the second codeword comprises: the second domain set is used for PDCCH validation for scheduling release of the second codeword.

As one embodiment, the meaning that at least one domain in the first domain set does not belong to the second domain set comprises: the domains included in the first domain set and the domains included in the second domain set are different.

As one embodiment, the meaning that at least one domain in the first domain set does not belong to the second domain set comprises: the domains included in the first domain set and the domains included in the second domain set respectively correspond to the first codeword and the second codeword.

As one embodiment, the meaning that at least one domain in the first domain set does not belong to the second domain set comprises: one domain included in the first domain set and one domain included in the second domain set are respectively two different domains in the DCI.

As one embodiment, the meaning that at least one domain in the first domain set does not belong to the second domain set comprises: the domains included in the first domain set and the domains included in the second domain set are not jointly encoded.

### Embodiment 2

Embodiment 2 illustrates a schematic diagram of a network architecture, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terms. The EPS 200 may comprise one piece of UE (User Equipment) 201, an NR-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet-switched services, but those skilled in the art will readily appreciate that various concepts presented throughout the present application may be extended to a network providing a circuit-switched service or other cellular networks. The NR-RAN comprises an NR Node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (Transmitter Receiver Point), or some other suitable terms. The gNB203 provides an access point to the EPC/5G-CN 210 for the UE201. Examples of the UE201 comprises a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, a drone, an aircraft, a narrowband Internet of Things device, a machine type communication device, a land vehicle, an automobile, a wearable device, or any other similarly functional apparatuses. Those skilled in the art may also call the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted by the S-GW212, and the S-GW212 itself is connected to the P-GW213. The P-GW213 provides UE IP address allocation and other functions. The P-GW213 is connected to an Internet service 230. The Internet service 230 comprises an Internet protocol service corresponding to an operator, and may specifically comprise the Internet, the intranet, an IMS (IP Multimedia Subsystem) and a packet switching streaming service.

As one embodiment, the UE201 corresponds to the first node in the present application.

As one embodiment, the UE201 supports simultaneous sending of a plurality of panels.

As one embodiment, the UE201 supports sending in the same time-frequency resource set based on multi-codewords.

As one embodiment, the UE201 supports a plurality of uplink RFs (Radio Frequencies).

As one embodiment, the UE201 supports simultaneous sending of a plurality of uplink RFs.

As one embodiment, the UE201 supports reporting of a plurality of UE capability value sets.

As one embodiment, the NR node B corresponds to the second node in the present application.

As one embodiment, the NR node B supports simultaneous reception of signals from a plurality of panels of one terminal.

As one embodiment, the NR node B supports reception of signals sent by a plurality of uplink RFs (Radio Frequencies) from the same terminal.

As one embodiment, the NR node B is one base station.

As one embodiment, the NR node B is one cell.

As one embodiment, the NR node B comprises a plurality of cells.

As one embodiment, the first node in the present application corresponds to the UE201, and the second node in the present application corresponds to the NR node B.

### Embodiment 3

Embodiment 3 shows a schematic diagram of an embodiment of radio protocol architectures for one user plane and one control plane according to the present application, as shown in FIG. 3. FIG. 3 is a schematic diagram illustrating an embodiment of radio protocol architectures for a user plane 350 and a control plane 300, and FIG. 3 exhibits the radio protocol architecture for the control plane 300 between a first communication node device (UE, gNB, or RSU in V2X) and a second communication node device (gNB, UE, or RSU in V2X) by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is above PHY301 and is responsible for the link between the first communication node device and the second communication node device by PHY301. The L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearer and logical channels. The PDCP sublayer 304 also provides security by encrypting data packets, and the PDCP sublayer 304 also provides zone-crossing mobility support of the first communication node device for the second communication node device. The RLC sublayer 303 provides segmentation and reassembly of upper-layer data packets, retransmission of lost data packets, and reordering of data packets to compensate for unordered reception caused by HARQ. The MAC sublayer 302 provides multiplexing between logical and transmission channels. The MAC sublayer 302 is also responsible for allocating, between the first communication node devices, various radio resources (for example, resource blocks) in one cell. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring a lower layer by using the RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sublayer 354 in the L2 layer 355, the RLC sublayer 353 in the L2 layer 355, and the MAC sublayer 352 in the L2 layer 355 is substantially the same as that in the control plane 300 for the corresponding layers and sublayers, but the PDCP sublayer 354 also provides header compression for upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between a QoS stream and a data radio bearer (DRB) to support the diversity of services. Although not shown, the first communication node device may have several upper layers above the L2 layer 355, comprising a network layer (for example, an IP layer) terminated at P-GW on the network side and an application layer terminated at the connected other end (for example, remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the PDCP304 of the second communication node device is used for generating the scheduling of the first communication node device.

As one embodiment, the PDCP354 of the second communication node device is used for generating the scheduling of the first communication node device.

As one embodiment, the first information block is generated in the RRC306.

As one embodiment, the first signaling is generated in the PHY301 or the PHY351.

As one embodiment, the first signaling is generated in the MAC302 or the MAC352.

As one embodiment, the first signal is generated in the MAC302 or the MAC352.

As one embodiment, the first signal is generated in the RRC306.

As one embodiment, the second signal is generated in the MAC302 or the MAC352.

As one embodiment, the second signal is generated in the RRC306.

As one embodiment, the second signaling is generated in the PHY301 or the PHY351.

As one embodiment, the second signaling is generated in the MAC302 or the MAC352.

As one embodiment, the first node is one terminal.

As one embodiment, the first node is one relay.

As one embodiment, the second node is one relay.

As one embodiment, the second node is one base station.

As one embodiment, the second node is one gNB.

As one embodiment, the second node is one TRP (Transmitter Receiver Point).

As one embodiment, the second node is used for managing a plurality of TRPs.

As one embodiment, the second node is a node for managing a plurality of cells.

### Embodiment 4

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In the transmission from the second communication device 410 to the first communication device 450, at the second communication device 410, an upper-layer data packet from a core network is provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of a lost packet, and for a signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (for example, a pilot frequency) in the time domain and/or frequency domain, and subsequently uses an inverse fast Fourier transform (IFFT) to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the second communication device 410 to the first communication device 450, at the first communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any spatial stream with the first communication device 450 as the destination. The symbols on each spatial stream are demodulated and recovered in the receiving processor 456, and a soft decision is generated. Subsequently, the receiving processor 456 decodes and deinterleaves the soft decision to recover the upper-layer data and a control signal transmitted by the second communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing.

In the transmission from the first communication device 450 to the second communication device 410, at the first communication device 450, a data source 467 is used for providing the upper-layer data packet to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on wireless resource allocation, and implements L2 layer functions for the user plane and the control plane. The controller/processor 459 is also responsible for the retransmission of the lost packet, and for a signaling to the second communication device 410. The transmitting processor 468 performs modulation mapping and channel coding processing, and the multi-antenna transmitting processor 457 performs digital multi-antenna spatial precoding (comprising codebook-based precoding and non-codebook-based precoding) and beamforming processing. Subsequently, the transmitting processor 468 modulates the generated spatial stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packet from the UE450. The upper-layer data packet from the controller/processor 475 can be provided to the core network.

As one embodiment, the first communication device 450 comprises: at least one processor and at least one memory, wherein the at least one memory comprises a computer program code; the at least one memory and the computer program code are configured to be used with the at least one processor, and the first communication device 450 apparatus at least: first receives a first information block, the first information block being used for configuring a first semi-persistent transmission, and the first semi-persistent transmission corresponding to a first codeword and a second codeword; and then the node receives first signaling, the first signaling being used for releasing scheduling corresponding to at least one of the first codeword and the second codeword corresponding to the first semi-persistent transmission; the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the first communication device 450 comprises: a memory storing a computer-readable instruction program, wherein the computer-readable instruction program generates actions when executed by at least one processor, the actions comprise: first receiving a first information block, the first information block being used for configuring a first semi-persistent transmission, and the first semi-persistent transmission corresponding to a first codeword and a second codeword; and then the node receives first signaling, the first signaling being used for releasing scheduling corresponding to at least one of the first codeword and the second codeword corresponding to the first semi-persistent transmission; the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the second communication device 410 comprises: at least one processor and at least one memory, wherein the at least one memory comprises a computer program code; the at least one memory and the computer program code are configured to be used with the at least one processor. The second communication device 410 at least: first sends a first information block, the first information block being used for configuring a first semi-persistent transmission, and the first semi-persistent transmission corresponding to a first codeword and a second codeword; and then sending first signaling, the first signaling being used for releasing scheduling corresponding to at least one of the first codeword and the second codeword corresponding to the first semi-persistent transmission, the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the second communication device 410 apparatus comprises: a memory storing a computer-readable instruction program, wherein the computer-readable instruction program generates actions when executed by at least one processor, the actions comprise: first sending a first information block, the first information block being used for configuring a first semi-persistent transmission, and the first semi-persistent transmission corresponding to a first codeword and a second codeword; and then sending first signaling, the first signaling being used for releasing scheduling corresponding to at least one of the first codeword and the second codeword corresponding to the first semi-persistent transmission, the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the first communication device 450 corresponds to the first node in the present application.

As one embodiment, the second communication device 410 corresponds to the second node in the present application.

As one embodiment, the first communication device 450 is one piece of UE.

As one embodiment, the first communication device 450 is one terminal.

As one embodiment, the first communication device 450 is one relay.

As one embodiment, the second communication device 410 is one base station.

As one embodiment, the second communication device 410 is one relay.

As one embodiment, the second communication device 410 is one network device.

As one embodiment, the second communication device 410 is one serving cell.

As one embodiment, the second communication device 410 is one TRP.

As one embodiment, at least the first four of the antenna 452, the receiving device 454, the multi-antenna receiving processor 458, the receiving processor 456, and the controller/processor 459 are used for receiving the first information block; and at least the first four of the antenna 420, the transmitting device 418, the multi-antenna transmitting processor 471, the transmitting processor 416, and the controller/processor 475 are used for sending the first information block.

As one embodiment, at least the first four of the antenna 452, the receiving device 454, the multi-antenna receiving processor 458, the receiving processor 456, and the controller/processor 459 are used for receiving the first signaling; and at least the first four of the antenna 420, the transmitting device 418, the multi-antenna transmitting processor 471, the transmitting processor 416, and the controller/processor 475 are used for sending the first signaling.

As one embodiment, at least the first four of the antenna 452, the receiving device 454, the multi-antenna receiving processor 458, the receiving processor 456, and the controller/processor 459 are used for abandoning receiving at least one of the first signal and the second signal; and at least the first four of the antenna 420, the transmitting device 418, the multi-antenna transmitting processor 471, the transmitting processor 416, and the controller/processor 475 are used for abandoning sending at least one of the first signal and the second signal.

As one implementation, at least the first four of the antenna 452, the transmitting device 454, the multi-antenna transmitting processor 457, the transmitting processor 468, and the controller/processor 459 are used for abandoning sending at least one of the first signal and the second signal; and at least the first four of the antenna 420, the receiving device 418, the multi-antenna receiving processor 472, the receiving processor 470, and the controller/processor 475 are used for abandoning receiving at least one of the first signal and the second signal.

As one embodiment, at least the first four of the antenna 452, the receiving device 454, the multi-antenna receiving processor 458, the receiving processor 456, and the controller/processor 459 are used for receiving the second signaling; and at least the first four of the antenna 420, the transmitting device 418, the multi-antenna transmitting processor 471, the transmitting processor 416, and the controller/processor 475 are used for sending the second signaling.

### Embodiment 5

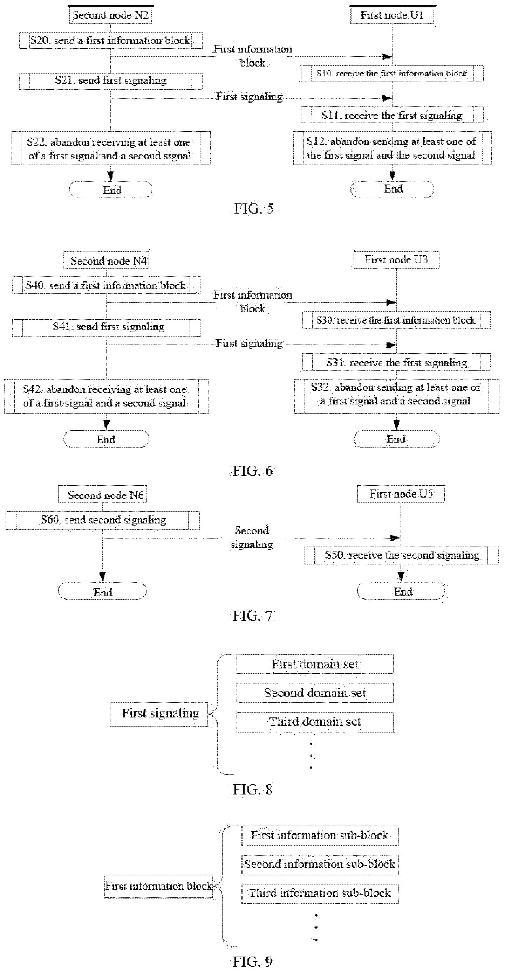

Embodiment 5 illustrates a flow chart of one first signaling, as shown in FIG. 5. In FIG. 5, a first node U1 communicates with a second node N2 by a radio link. It is particularly explained that the order in the present embodiment does not limit the signal transmission order and the implementation order in the present application. In the absence of conflicts, the embodiment, sub-embodiment and subsidiary embodiment in Embodiment 5 can be applied to Embodiment 6 or 7; and on the contrary, in the absence of conflicts, any embodiment, sub-embodiment and subsidiary embodiment in Embodiment 6 or 7 can be applied to Embodiment 5.

For **the first node U1,** a first information block is received in step S10; first signaling is received in step S11; and at least one of a first signal and a second signal is abandoned from being sent in step S12.

For **the second node N2,** the first information block is sent in step S20; the first signaling is sent in step S21; and at least one of the first signal and the second signal is abandoned from being received in step S22.

In Embodiment 5, the first information block is used for configuring a first semi-persistent transmission, and the first semi-persistent transmission corresponds to a first codeword and a second codeword; the first signaling is used for releasing scheduling corresponding to at least one of the first codeword and the second codeword corresponding to the first semi-persistent transmission; the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set; the first semi-persistent transmission configured by the first information block comprises the first signal and the second signal, the first signal corresponds to the first codeword, and the second signal corresponds to the second codeword; when the first signaling is used for releasing the scheduling corresponding to only the second codeword in the first codeword and the second codeword corresponding to the first semi-persistent transmission, the first node sends the first signal and abandons sending the second signal; and when the first signaling is used for releasing the scheduling corresponding to the first codeword and the scheduling corresponding to the second codeword corresponding to the first semi-persistent transmission, the first node abandons sending the first signal and abandons sending the second signal.

Typically, the step S12 comprises: abandoning sending the first signal and the second signal, and the step S22 comprises: abandoning receiving the first signal and the second signal.

Typically, the step S12 comprises: abandoning sending the first signal and sending the second signal, and the step S22 comprises: abandoning receiving the first signal and receiving the second signal.

Typically, the step S12 comprises: abandoning sending the second signal and sending the first signal, and the step S22 comprises: abandoning receiving the second signal and receiving the first signal.

Typically, the PDCCH validation for the scheduling release of the codeword corresponding to the first signaling depends on at least one of a value of the first domain set in the first signaling or a value of the second domain set in the first signaling.

As one embodiment, the PDCCH validation for the scheduling release of the first codeword corresponding to the first signaling depends on the value of the first domain set.

As one sub-embodiment of this embodiment, the first domain set comprises an HARQ process number field, and the HARQ process number field included in the first domain set is equal to all "0", which is used for achieving the PDCCH validation for the scheduling release of the first codeword corresponding to the first signaling.

As one sub-embodiment of this embodiment, the first domain set comprises an RV field, and the RV field included in the first domain set is equal to all "0", which is used for achieving the PDCCH validation for the scheduling release of the first codeword corresponding to the first signaling.

As one sub-embodiment of this embodiment, the first domain set comprises an MCS field, and the MCS field included in the first domain set is equal to all "1", which is used for achieving the PDCCH validation for the scheduling release of the first codeword corresponding to the first signaling.

As one sub-embodiment of this embodiment, the first domain set comprises an FDRA field, and the first signaling is a UL grant; when the resource configuration mode is Type 2 and µ is equal to 1, the FDRA field included in the first domain set is equal to all "0", which is used for achieving the PDCCH validation for the scheduling release of the first codeword corresponding to the first signaling; and otherwise, the FDRA field included in the first domain set is equal to all "1", which is used for achieving the PDCCH validation for the scheduling release of the first codeword corresponding to the first signaling.

As one sub-embodiment of this embodiment, the first domain set comprises the FDRA field, and the first signaling is DL Assignment; when the resource configuration mode is Type 0 or dynamicSwitch, the FDRA field included in the first domain set is equal to all "0", which is used for achieving the PDCCH validation for the scheduling release of the first codeword corresponding to the first signaling; and when the resource configuration mode is Type 1, the FDRA field included in the first domain set is equal to all "1", which is used for achieving the PDCCH validation for the scheduling release of the first codeword corresponding to the first signaling.

As one embodiment, the PDCCH validation for the scheduling release of the second codeword corresponding to the first signaling depends on the value of the second domain set.

As one sub-embodiment of this embodiment, the second domain set comprises an RV field, and the RV field included in the second domain set is equal to all "0", which is used for achieving the PDCCH validation for the scheduling release of the second codeword corresponding to the first signaling.

As one sub-embodiment of this embodiment, the second domain set comprises an MCS field, and the MCS field included in the second domain set is equal to all "1", which is used for achieving the PDCCH validation for the scheduling release of the second codeword corresponding to the first signaling.

As one sub-embodiment of this embodiment, the second domain set comprises the FDRA field, and the first signaling is the UL grant; when the resource configuration mode is Type 2 and µ is equal to 1, the FDRA field included in the second domain set is equal to all "0", which is used for achieving the PDCCH validation for the scheduling release of the second codeword corresponding to the first signaling; and otherwise, the FDRA field included in the second domain set is equal to all "1", which is used for achieving the PDCCH validation for the scheduling release of the second codeword corresponding to the first signaling.

As one sub-embodiment of this embodiment, the second domain set comprises the FDRA field, and the first signaling is the DL Assignment; when the resource configuration mode is Type 0 or dynamicSwitch, the FDRA field included in the second domain set is equal to all "0", which is used for achieving the PDCCH validation for the scheduling release of the second codeword corresponding to the first signaling; and when the resource configuration mode is Type 1, the FDRA field included in the second domain set is equal to all "1", which is used for achieving the PDCCH validation for the scheduling release of the second codeword corresponding to the first signaling.

Typically, only one of the PDCCH validation for the scheduling release of the first codeword corresponding to the first semi-persistent transmission and the PDCCH validation for the scheduling release of the second codeword corresponding to the first semi-persistent transmission is achieved; when the PDCCH validation for the scheduling release of the first codeword corresponding to the first semi-persistent transmission is achieved, the first node validates that the first signaling is used for releasing the scheduling corresponding to the first codeword corresponding to the first semi-persistent transmission; and when the PDCCH validation for the scheduling release of the second codeword corresponding to the first semi-persistent transmission is achieved, the first node validates that the first signaling is used for releasing the scheduling corresponding to the second codeword corresponding to the first semi-persistent transmission.

As one embodiment, when the PDCCH validation for the scheduling release of the first codeword corresponding to the first semi-persistent transmission and the PDCCH validation for the scheduling release of the second codeword corresponding to the first semi-persistent transmission are achieved, the first node validates that the first signaling is used for releasing the scheduling corresponding to the first codeword and the scheduling corresponding to the second codeword corresponding to the first semi-persistent transmission.

Typically, the first information block comprises a first information sub-block set, and the first information sub-block set is simultaneously applied to the transmission of the first codeword and the transmission of the second codeword; and the first information sub-block set comprises a first information sub-block, and the first information sub-block is used for determining one of a number of HARQ processes or resource configuration information.

As one embodiment, the first information sub-block set comprises a plurality of fields in one IE in TS 38.331.

As one embodiment, the first information sub-block corresponds to 1 field in one IE in TS 38.331.

As one embodiment, the first information sub-block is used for determining a number of HARQ processes.

As one sub-embodiment of this embodiment, the number of HARQ processes determined by the first information sub-block is allocated to the first codeword and the second codeword.

As one sub-embodiment of this embodiment, the number of HARQ processes determined by the first information sub-block is used for determining the number of HARQ processes occupied by the transmission corresponding to the first codeword, and the number of HARQ processes occupied by the transmission corresponding to the second codeword.

As one sub-embodiment of this embodiment, the first information sub-block corresponds to an nrofHARQ-Processes field in SPS-Config IE in TS 38.331.

As one sub-embodiment of this embodiment, the first information sub-block corresponds to an nrofHARQ-Processes field in ConfiguredGrantConfig IE in TS 38.331.

As one embodiment, the first information sub-block is used for determining resource configuration information.

As one sub-embodiment of this embodiment, the first information sub-block is simultaneously used for determining resource configuration information of the first codeword and the second codeword.

As one sub-embodiment of this embodiment, the first information sub-block corresponds to a periodicity field in the SPS-Config IE in TS 38.331.

As one sub-embodiment of this embodiment, the first information sub-block corresponds to a pdsch-AggregationFactor field in the SPS-Config IE in TS 38.331.

As one sub-embodiment of this embodiment, the first information sub-block corresponds to an mcs-Table field in the SPS-Config IE in TS 38.331.

As one sub-embodiment of this embodiment, the first information sub-block corresponds to an mcs-Table field in ConfiguredGrantConfig IE in TS 38.331.

As one sub-embodiment of this embodiment, the first information sub-block corresponds to an mcs-TableTransformPrecoder field in ConfiguredGrantConfig IE in TS 38.331.

As one sub-embodiment of this embodiment, the first information sub-block corresponds to a frequencyHopping field in ConfiguredGrantConfig IE in TS 38.331.

As one sub-embodiment of this embodiment, the first information sub-block corresponds to a resourceAllocation field in ConfiguredGrantConfig IE in TS 38.331.

As one sub-embodiment of this embodiment, the first information sub-block corresponds to an rbg-Size field in ConfiguredGrantConfig IE in TS 38.331.

As one sub-embodiment of this embodiment, the first information sub-block corresponds to a periodicity field in ConfiguredGrantConfig IE in TS 38.331.

Typically, the first semi-persistent transmission configured by the first information block is associated with a first index; the first domain set comprises a first domain, and the second domain set comprises a second domain; and the first domain and the second domain in the first signaling are simultaneously used for determining the first index.

As one embodiment, the first domain included in the first domain set is the HARQ process number field, and the first domain included in the first domain set is not used for the PDCCH validation for the scheduling release corresponding to the first codeword.

As one embodiment, the second domain included in the first domain set is the HARQ process number field, and the second domain included in the second domain set is not used for the PDCCH validation for the scheduling release corresponding to the second codeword.

As one embodiment, the first index is sps-ConfigIndex.

As one embodiment, the first index is configuredGrantConfigIndex.

As one embodiment, the first index is configuredGrantConfigIndexMAC.

Typically, the first semi-persistent transmission configured by the first information block is associated with a first index; the first domain set comprises a first domain, and the second domain set comprises a second domain; and only one domain of the first domain and the second domain in the first signaling is used for determining the first index.

As one embodiment, when the first semi-persistent transmission configured by the first information block is associated with the first index, the first domain in the first signaling is used for determining the first index, and the second domain in the first signaling is used for the PDCCH validation.

As one embodiment, when the first semi-persistent transmission configured by the first information block is associated with the first index, the first domain in the first signaling is used for determining the first index, and the second domain in the first signaling is used for validating whether the first signaling is correctly received.

Typically, a first index set and a second index set both comprise the first index, the first index set corresponds to the transmission of the first codeword, the second index set corresponds to the transmission of the second codeword, and the first index set and the second index set are independently configured, respectively.

As one embodiment, the first index set comprises K1 sps-ConfigIndex, and the K1 is a positive integer greater than 1.

As one sub-embodiment of this embodiment, the first index set is used for indicating a transmission associated with the first codeword in the K1 semi-persistent transmissions corresponding to the included K1 sps-ConfigIndex.

As one embodiment, the second index set comprises K2 sps-ConfigIndex, and the K2 is a positive integer greater than 1.

As one sub-embodiment of this embodiment, the second index set is used for indicating a transmission associated with the second codeword in the K2 semi-persistent transmissions corresponding to the included K2 sps-ConfigIndex.

As one embodiment, the first index set comprises K1 configuredGrantConfigIndex, and the K1 is a positive integer greater than 1.

As one sub-embodiment of this embodiment, the first index set is used for indicating a transmission associated with the first codeword in the K1 semi-persistent transmissions corresponding to the included K1 configuredGrantConfigIndex.

As one embodiment, the second index set comprises K2 configuredGrantConfigIndex, and the K2 is a positive integer greater than 1.

As one sub-embodiment of this embodiment, the second index set is used for indicating a transmission associated with the first codeword in the K2 semi-persistent transmissions corresponding to the included K2 configuredGrantConfigIndex.

As one embodiment, the first index set comprises K1 configuredGrantConfigIndexMAC, and the K1 is a positive integer greater than 1.

As one sub-embodiment of this embodiment, the first index set is used for indicating a transmission associated with the first codeword in the K1 semi-persistent transmissions corresponding to the included K1 configuredGrantConfigIndexMAC.

As one embodiment, the second index set comprises K2 configuredGrantConfigIndexMAC, and the K2 is a positive integer greater than 1.

As one sub-embodiment of this embodiment, the second index set is used for indicating a transmission associated with the first codeword in the K2 semi-persistent transmissions corresponding to the included K2 configuredGrantConfigIndexMAC.

As one embodiment, the meaning that "the first index set and the second index set are independently configured, respectively" comprises: the first index set and the second index set respectively correspond to two SPS-ConfigToReleaseList.

As one embodiment, the meaning that "the first index set and the second index set are independently configured, respectively" comprises: the first index set and the second index set respectively correspond to two SPS-ConfigDeactivationState.

As one embodiment, the meaning that "the first index set and the second index set are independently configured, respectively" comprises: the first index set and the second index set respectively correspond to two SPS-ConfigDeactivationStateList.

As one embodiment, the meaning that "the first index set and the second index set are independently configured, respectively" comprises: the first index set and the second index set respectively correspond to two ConfiguredGrantConfigToReleaseList.

As one embodiment, the meaning that "the first index set and the second index set are independently configured, respectively" comprises: the first index set and the second index set respectively correspond to two ConfiguredGrantConfigType2DeactivationState.

As one embodiment, the meaning that "the first index set and the second index set are independently configured, respectively" comprises: the first index set and the second index set respectively correspond to two ConfiguredGrantConfigType2DeactivationStateList.

As one embodiment, the meaning that "the first index set and the second index set are independently configured, respectively" comprises: the first index set and the second index set respectively correspond to two RRC IE.

As one embodiment, the meaning that "the first index set and the second index set are independently configured, respectively" comprises: the first index set and the second index set respectively correspond to two domains in one RRC IE.

As one embodiment, the first domain in the first signaling indicates the first index set, the second domain in the first signaling indicates the second index set, and the first index set and the second index set both comprise the first index.

As one embodiment, the first domain in the first signaling indicates the first index set, and the first index set comprises the first index.

As one sub-embodiment of this embodiment, the second domain in the first signaling is not used for determining the first index.

As one embodiment, the second domain in the first signaling indicates the second index set, and the second index set comprises the first index.

As one sub-embodiment of this embodiment, the first domain in the first signaling is not used for determining the first index.

As one embodiment, the first signal and the second signal correspond to one UL Grant.

As one embodiment, the first signal and the second signal correspond to one PUSCH.

As one embodiment, the first signal and the second signal respectively correspond to two PUSCHs.

As one embodiment, the first signal and the second signal correspond to one UL-SCH (Uplink Shared Channel).

As one embodiment, the first signal and the second signal respectively correspond to two UL-SCHs.

### Embodiment 6

Embodiment 6 illustrates a flow chart of another first signaling, as shown in FIG. 6. In FIG. 6, a first node U3 communicates with a second node N4 by a radio link. It is particularly explained that the order in the present embodiment does not limit the signal transmission order and the implementation order in the present application. In the absence of conflicts, the embodiment, sub-embodiment and subsidiary embodiment in Embodiment 6 can be applied to Embodiment 5 or 7; and on the contrary, in the absence of conflicts, any embodiment, sub-embodiment and subsidiary embodiment in Embodiment 5 or 7 can be applied to Embodiment 6.

For **the first node U3,** a first information block is received in step S30; first signaling is received in step S31; and at least one of the first signal and the second signal is abandoned from being received in step S32.

For **the second node N4,** the first information block is sent in step S40; the first signaling is sent in step S41; and at least one of a first signal and a second signal is abandoned from being sent in step S42.

In Embodiment 6, the first information block is used for configuring a first semi-persistent transmission, and the first semi-persistent transmission corresponds to a first codeword and a second codeword; the first signaling is used for releasing scheduling corresponding to at least one of the first codeword and the second codeword corresponding to the first semi-persistent transmission; the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set; the first semi-persistent transmission configured by the first information block comprises the first signal and the second signal, the first signal corresponds to the first codeword, and the second signal corresponds to the second codeword; when the first signaling is used for releasing the scheduling corresponding to only the second codeword in the first codeword and the second codeword corresponding to the first semi-persistent transmission, the first node receives the first signal and abandons receiving the second signal; and when the first signaling is used for releasing the scheduling corresponding to the first codeword and the scheduling corresponding to the second codeword corresponding to the first semi-persistent transmission, the first node abandons receiving the first signal and abandons receiving the second signal.

Typically, the step S32 comprises: abandoning receiving the first signal and the second signal, and the step S42 comprises: abandoning sending the first signal and the second signal.

Typically, the step S32 comprises: abandoning receiving the first signal and receiving the second signal, and the step S42 comprises: abandoning sending the first signal and sending the second signal.

Typically, the step S32 comprises: abandoning receiving the second signal and receiving the first signal, and the step S42 comprises: abandoning sending the second signal and sending the first signal.

Typically, the PDCCH validation for the scheduling release of the codeword corresponding to the first signaling depends on at least one of a value of the first domain set in the first signaling or a value of the second domain set in the first signaling.

Typically, only one of the PDCCH validation for the scheduling release of the first codeword corresponding to the first semi-persistent transmission and the PDCCH validation for the scheduling release of the second codeword corresponding to the first semi-persistent transmission is achieved; when the PDCCH validation for the scheduling release of the first codeword corresponding to the first semi-persistent transmission is achieved, the first node validates that the first signaling is used for releasing the scheduling corresponding to the first codeword corresponding to the first semi-persistent transmission; and when the PDCCH validation for the scheduling release of the second codeword corresponding to the first semi-persistent transmission is achieved, the first node validates that the first signaling is used for releasing the scheduling corresponding to the second codeword corresponding to the first semi-persistent transmission.

Typically, the first information block comprises a first information sub-block set, and the first information sub-block set is simultaneously applied to the transmission of the first codeword and the transmission of the second codeword; and the first information sub-block set comprises a first information sub-block, and the first information sub-block is used for determining one of a number of HARQ processes or resource configuration information.

Typically, the first semi-persistent transmission configured by the first information block is associated with a first index; the first domain set comprises a first domain, and the second domain set comprises a second domain; and the first domain and the second domain in the first signaling are simultaneously used for determining the first index.

Typically, the first semi-persistent transmission configured by the first information block is associated with a first index; the first domain set comprises a first domain, and the second domain set comprises a second domain; and only one domain of the first domain and the second domain in the first signaling is used for determining the first index.

Typically, a first index set and a second index set both comprise the first index, the first index set corresponds to the transmission of the first codeword, the second index set corresponds to the transmission of the second codeword, and the first index set and the second index set are independently configured, respectively.

As one embodiment, the first signal and the second signal correspond to one DL Assignment.

As one embodiment, the first signal and the second signal correspond to one PDSCH.

As one embodiment, the first signal and the second signal respectively correspond to two PDSCHs.

As one embodiment, the first signal and the second signal correspond to one DL-SCH (Downlink Shared Channel).

As one embodiment, the first signal and the second signal respectively correspond to two DL-SCHs.

### Embodiment 7

Embodiment 7 illustrates a flow chart of one second signaling, as shown in FIG. 7. In FIG. 7, a first node U5 communicates with a second node N6 by a radio link. It is particularly explained that the order in the present embodiment does not limit the signal transmission order and the implementation order in the present application. In the absence of conflicts, the embodiment, sub-embodiment and subsidiary embodiment in Embodiment 7 can be applied to Embodiment 5 or 6; and on the contrary, in the absence of conflicts, any embodiment, sub-embodiment and subsidiary embodiment in Embodiment 5 or 6 can be applied to Embodiment 7.

For the **first node U5,** the second signaling is received in step S50.

For the **second node N6,** the second signaling is sent in step S60.

In Embodiment 7, the second signaling is used for activating the scheduling corresponding to the first codeword and the scheduling corresponding to the second codeword corresponding to the first semi-persistent transmission; the second signaling comprises a third domain and a fourth domain, the third domain included in the second signaling and one domain in the first domain set are a same type of domains, and the fourth domain included in the second signaling and one domain in the second domain set are a same type of domains; and one of the third domain or the fourth domain is used for PDCCH validation for common scheduling activation of the first codeword and the second codeword.

As one embodiment, the second signaling comprises DCI.

As one embodiment, the physical layer channel occupied by the second signaling comprises a PDCCH.

As one embodiment, the second signaling is one DL grant or the second signaling is one UL grant.

As one embodiment, the second signaling comprises an MAC CE.

As one embodiment, the CRC included in the second signaling is scrambled by a CS-RNTI.

As one embodiment, the CRC included in the second signaling is scrambled by a SP-CSI-RNTI.

As one embodiment, the CRC included in the second signaling is scrambled by an RNTI other than a C-RNTI.

As one embodiment, only one domain of the third domain or the fourth domain is used for the PDCCH validation for common scheduling activation of the first codeword and the second codeword.

As one embodiment, when one domain of the third domain or the fourth domain is used for the PDCCH validation for the common scheduling activation of the first codeword and the second codeword, the other domain of the third domain or the fourth domain is used for verifying the reception of the PDCCH.

As one embodiment, when one domain of the third domain or the fourth domain is used for the PDCCH validation for the common scheduling activation of the first codeword and the second codeword, the value corresponding to the third domain is the same as the value corresponding to the fourth domain.

As one embodiment, when one domain of the third domain or the fourth domain is used for the PDCCH validation for the common scheduling activation of the first codeword and the second codeword, the other domain of the third domain or the fourth domain is used for implementing functions other than the PDCCH validation for the scheduling activation.

As one embodiment, the third domain or the fourth domain is used for the PDCCH validation for the common scheduling activation of the first codeword and the second codeword.

As one embodiment, only the third domain of the third domain and the fourth domain is used for the PDCCH validation for the common scheduling activation of the first codeword and the second codeword.

As one embodiment, the third domain included in the second signaling corresponds to an HARQ process number field.

As one embodiment, the third domain included in the second signaling corresponds to an RV field.

As one embodiment, the fourth domain included in the second signaling corresponds to an HARQ process number field.

As one embodiment, the fourth domain included in the second signaling corresponds to an RV field.

As one embodiment, the meaning that the third domain included in the second signaling and one domain in the first domain set are a same type of domains comprises: the third domain included in the second signaling and one domain in the first domain set correspond to the same naming.

As one embodiment, the meaning that the fourth domain included in the second signaling and one domain in the second domain set are a same type of domains comprises: the fourth domain included in the second signaling and one domain in the second domain set correspond to the same naming.

### Embodiment 8

Embodiment 8 illustrates a schematic diagram of one first signaling, as shown in FIG. 8. In FIG. 8, the first signaling comprises a first domain set and a second domain set, and the first domain set and the second domain set respectively correspond to a first codeword and a second codeword; and the first signaling also comprises a third domain set, and the third domain set corresponds to the first codeword and the second codeword.

As one embodiment, the third domain set is common to the first codeword and the second codeword.

As one embodiment, the third domain set comprises a TDRA (Time Domain Resource Allocation) field.

As one embodiment, the third domain set comprises a DAI (Downlink assignment index) field.

As one embodiment, the third domain set comprises a TPC (Transmission Power Control) command related field.

### Embodiment 9

Embodiment 9 illustrates a schematic diagram of one first information block, as shown in FIG. 9. In FIG. 9, the first information block comprises a first information sub-block, a second information sub-block, and a third information sub-block, the first information sub-block set is simultaneously applied to the transmission of the first codeword and the transmission of the second codeword, the second information sub-block is applied to the transmission of the first codeword, and the third information sub-block is applied to the transmission of the second codeword.

As one embodiment, the second information sub-block set comprises a plurality of domains in one IE in TS 38.331.

As one embodiment, the second information sub-block corresponds to 1 domain in one IE in TS 38.331.

As one embodiment, the third information sub-block set comprises a plurality of domains in one IE in TS 38.331.

As one embodiment, the third information sub-block corresponds to 1 domain in one IE in TS 38.331.

As one embodiment, the second information sub-block corresponds to an n1PUCCH-AN field in SPS-Config IE in TS 38.331.

As one embodiment, the second information sub-block corresponds to an harq-ProcID-Offset field in the SPS-Config IE in TS 38.331.

As one embodiment, the second information sub-block corresponds to an harq-CodebookID field in the SPS-Config IE in TS 38.331.

As one embodiment, the third information sub-block corresponds to an n1PUCCH-AN field in the SPS-Config IE in TS 38.331.

As one embodiment, the third information sub-block corresponds to an harq-ProcID-Offset field in the SPS-Config IE in TS 38.331.

As one embodiment, the third information sub-block corresponds to an harq-CodebookID field in the SPS-Config IE in TS 38.331.

As one embodiment, the second information sub-block corresponds to an srs-ResourceIndicator field in ConfiguredGrantConfig IE in TS 38.331.

As one embodiment, the second information sub-block corresponds to an srs-pathlossReferenceIndex field in ConfiguredGrantConfig IE in TS 38.331.

As one embodiment, the second information sub-block corresponds to a cg-DMRS-Configuration field in ConfiguredGrantConfig IE in TS 38.331.

As one embodiment, the second information sub-block corresponds to a cg-DMRS-Configuration field in ConfiguredGrantConfig IE in TS 38.331.

As one embodiment, the second information sub-block corresponds to a p0-PUSCH-Alpha field in ConfiguredGrantConfig IE in TS 38.331.

As one embodiment, the third information sub-block corresponds to an srs-ResourceIndicator field in ConfiguredGrantConfig IE in TS 38.331.

As one embodiment, the third information sub-block corresponds to an srs-pathlossReferenceIndex field in ConfiguredGrantConfig IE in TS 38.331.

As one embodiment, the third information sub-block corresponds to a cg-DMRS-Configuration field in ConfiguredGrantConfig IE in TS 38.331.

As one embodiment, the third information sub-block corresponds to a cg-DMRS-Configuration field in ConfiguredGrantConfig IE in TS 38.331.

As one embodiment, the third information sub-block corresponds to a p0-PUSCH-Alpha field in ConfiguredGrantConfig IE in TS 38.331.

### Embodiment 10

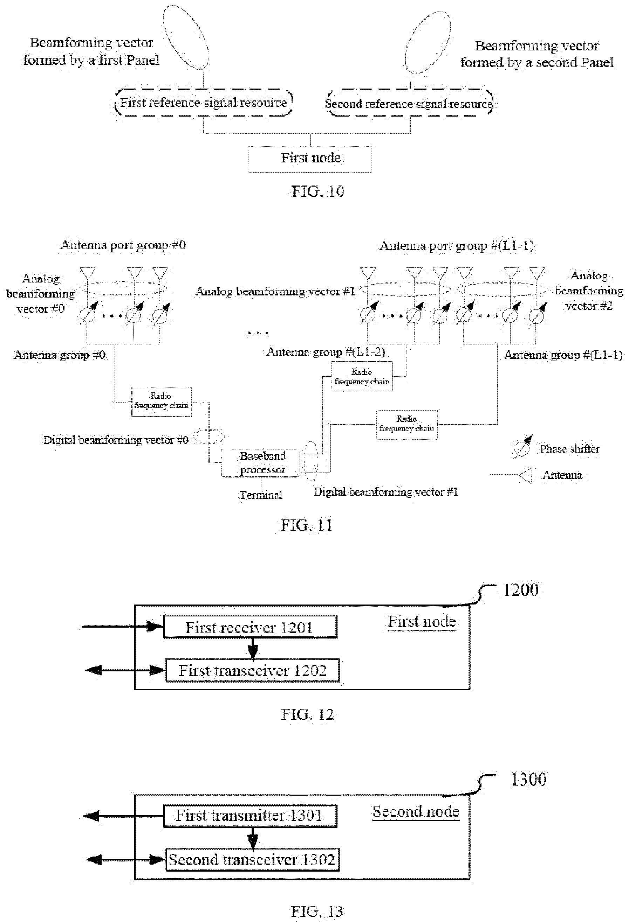

Embodiment 10 illustrates a schematic diagram of one first node, as shown in FIG. 10. In FIG. 10, the first node has two panels, namely, a first panel and a second panel, and the first panel and the second panel are respectively used for sending a wireless signal associated with the first codeword and a wireless signal associated with the second codeword; The first panel and the second panel are respectively associated with a first reference signal resource set and a second reference signal resource set; and the two panels can send two independent radio signals in the same block of time-frequency resources.

As one embodiment, the wireless signal sent in the first panel and one reference signal resource in the first reference signal resource set are QCL.

As one embodiment, the wireless signal sent in the second panel and one reference signal resource in the second reference signal resource set are QCL.

### Embodiment 11

Embodiment 11 illustrates a schematic diagram of an antenna port and an antenna port group, as shown in FIG. 11.

In Embodiment 11, one antenna port group comprises a positive integer number of antenna ports; one antenna port is formed by superimposing antennas in a positive integer number of antenna groups by antenna virtualization; and one antenna group comprises a positive integer number of antennas. One antenna group is connected to a baseband processor by one RF (Radio Frequency) chain, and different antenna groups correspond to different RF chains. The coefficients of mapping of all antennas in the positive integer number of antenna groups comprised in a given antenna port to the given antenna port constitute the beamforming vector corresponding to the given antenna port. The coefficients of mapping of a plurality of antennas comprised in any given antenna group in the positive integer number of antenna groups comprised in the given antenna port to the given antenna port constitute the analog beamforming vector of the given antenna group. The analog beamforming vectors corresponding to the positive integer number of antenna groups are arranged diagonally to form the analog beamforming matrix corresponding to the given antenna port. The coefficients of mapping of the positive integer number of antenna groups to the given antenna port constitute the digital beamforming vector corresponding to the given antenna port. The beamforming vector corresponding to the given antenna port is obtained by a product of the analog beamforming matrix corresponding to the given antenna port and the digital beamforming vector. Different antenna ports in one antenna port group are composed of the same antenna group, and different antenna ports in the same antenna port group correspond to different beamforming vectors.

FIG. 11 shows two antenna port groups: an antenna port group #0 and an antenna port group #1. Therein, the antenna port group #0 is composed of an antenna group #0, and the antenna port group #1 is composed of an antenna group #1 and an antenna group #2. The coefficients of mapping of the plurality of antennas in the antenna group #0 to the antenna port group #0 constitute an analog beamforming vector #0, and the coefficients of mapping of the antenna group #0 to the antenna port group #0 constitute a digital beamforming vector #0. The coefficients of mapping of the plurality of antennas in the antenna group #1 and the plurality of antennas in the antenna group #2 to the antenna port group #1 constitute the analog beamforming vector #1 and the analog beamforming vector #2, respectively; and the coefficients of mapping of the antenna group #1 and the antenna group #2 to the antenna port group #1 constitute the digital beamforming vector #1. The beamforming vector corresponding to any antenna port in the antenna port group #0 is obtained by a product of the analog beamforming vector #0 and the digital beamforming vector #0. The beamforming vector corresponding to any antenna port in the antenna port group #1 is obtained by a product of the analog beamforming matrix formed by diagonally arranging the analog beamforming vector #1 and the analog beamforming vector #2, and the digital beamforming vector #1.

As one sub-embodiment, one antenna port group comprises one antenna port. For example, the antenna port group #0 in FIG. 9 comprises one antenna port.

As one subsidiary embodiment of the above-mentioned sub-embodiment, the analog beamforming matrix corresponding to the one antenna port is dimensionally reduced to the analog beamforming vector, the digital beamforming vector corresponding to the one antenna port is dimensionally reduced to one scalar, and the beamforming vector corresponding to the one antenna port is equal to the analog beamforming vector corresponding to the one antenna port.

As one sub-embodiment, one antenna port group comprises a plurality of antenna ports. For example, the antenna port group #1 in FIG. 9 comprises a plurality of antenna ports.

As one subsidiary embodiment of the above-mentioned sub-embodiment, the plurality of antenna ports correspond to the same analog beamforming matrix and different digital beamforming vectors.

As one sub-embodiment, antenna ports in different antenna port groups correspond to different analog beamforming matrices.

As one sub-embodiment, any two antenna ports in one antenna port group are QCL (Quasi-Colocated).

As one sub-embodiment, any two antenna ports in one antenna port group are spatial QC_{L}.

As one embodiment, the plurality of antenna port groups in the figure correspond to one panel in the present application.

As one embodiment, the first reference signal resource set corresponds to a plurality of antenna port groups.

As one embodiment, the second reference signal resource set corresponds to a plurality of antenna port groups.

As one embodiment, the first reference signal resource set corresponds to one antenna port group.

As one embodiment, the second reference signal resource set corresponds to one antenna port group.

As one embodiment, one reference signal resource in the first reference signal resource set corresponds to one antenna port group.

As one embodiment, one reference signal resource in the second reference signal resource set corresponds to one antenna port group.

### Embodiment 12

Embodiment 12 illustrates a structural block diagram in one first node, as shown in FIG. 12. In FIG. 12, the first node 1200 comprises a first receiver 1201 and a first transceiver 1202.

The first receiver 1201 receives a first information block, the first information block is used for configuring a first semi-persistent transmission, and the first semi-persistent transmission corresponds to a first codeword and a second codeword;
the first transceiver 1202 receives first signaling, the first signaling is used for releasing scheduling corresponding to at least one of the first codeword and the second codeword corresponding to the first semi-persistent transmission;
in Embodiment 12, the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the PDCCH validation for the scheduling release of the codeword corresponding to the first signaling depends on at least one of a value of the first domain set in the first signaling or a value of the second domain set in the first signaling.

As one embodiment, only one of the PDCCH validation for the scheduling release of the first codeword corresponding to the first semi-persistent transmission and the PDCCH validation for the scheduling release of the second codeword corresponding to the first semi-persistent transmission is achieved; when the PDCCH validation for the scheduling release of the first codeword corresponding to the first semi-persistent transmission is achieved, the first node validates that the first signaling is used for releasing the scheduling corresponding to the first codeword corresponding to the first semi-persistent transmission; and when the PDCCH validation for the scheduling release of the second codeword corresponding to the first semi-persistent transmission is achieved, the first node validates that the first signaling is used for releasing the scheduling corresponding to the second codeword corresponding to the first semi-persistent transmission.

As one embodiment, the first information block comprises a first information sub-block set, and the first information sub-block set is simultaneously applied to the transmission of the first codeword and the transmission of the second codeword; and the first information sub-block set comprises a first information sub-block, and the first information sub-block is used for determining one of a number of HARQ processes or resource configuration information.

As one embodiment, the first semi-persistent transmission configured by the first information block is associated with a first index; the first domain set comprises a first domain, and the second domain set comprises a second domain; and the first domain and the second domain in the first signaling are simultaneously used for determining the first index.

As one embodiment, the first semi-persistent transmission configured by the first information block is associated with a first index; the first domain set comprises a first domain, and the second domain set comprises a second domain; and only one domain of the first domain and the second domain in the first signaling is used for determining the first index.

As one embodiment, a first index set and a second index set both comprise the first index, the first index set corresponds to the transmission of the first codeword, the second index set corresponds to the transmission of the second codeword, and the first index set and the second index set are independently configured, respectively.

As one embodiment, the first node comprises:
the first transceiver for abandoning receiving at least one of a first signal and a second signal,
wherein the first semi-persistent transmission configured by the first information block comprises the first signal and the second signal, the first signal corresponds to the first codeword, and the second signal corresponds to the second codeword; when the first signaling is used for releasing the scheduling corresponding to only the second codeword in the first codeword and the second codeword corresponding to the first semi-persistent transmission, the first node receives the first signal and abandons receiving the second signal; and when the first signaling is used for releasing the scheduling corresponding to the first codeword and the scheduling corresponding to the second codeword corresponding to the first semi-persistent transmission, the first node abandons receiving the first signal and abandons receiving the second signal.

As one embodiment, the first node comprises:
the first transceiver for abandoning sending at least one of a first signal and a second signal,
wherein the first semi-persistent transmission configured by the first information block comprises the first signal and the second signal, the first signal corresponds to the first codeword, and the second signal corresponds to the second codeword; when the first signaling is used for releasing the scheduling corresponding to only the second codeword in the first codeword and the second codeword corresponding to the first semi-persistent transmission, the first node sends the first signal and abandons sending the second signal; and when the first signaling is used for releasing the scheduling corresponding to the first codeword and the scheduling corresponding to the second codeword corresponding to the first semi-persistent transmission, the first node abandons sending the first signal and abandons sending the second signal.

As one embodiment, the first node comprises:
the first receiver for receiving second signaling, the second signaling being used for activating the scheduling corresponding to the first codeword and the scheduling corresponding to the second codeword corresponding to the first semi-persistent transmission,
wherein the second signaling comprises a third domain and a fourth domain, the third domain included in the second signaling and one domain in the first domain set are a same type of domains, and the fourth domain included in the second signaling and one domain in the second domain set are a same type of domains; and one of the third domain or the fourth domain is used for PDCCH validation for common scheduling activation of the first codeword and the second codeword.

As one embodiment, the first receiver 1201 comprises at least the first four of the antenna 452, the receiving device 454, the multi-antenna receiving processor 458, the receiving processor 456, and the controller/processor 459 in Embodiment 4.

As one embodiment, the first transceiver 1202 comprises at least the first 6 of the antenna 452, the receiving device/transmitting device 454, the multi-antenna receiving processor 458, the multi-antenna transmitting processor 457, the receiving processor 456, the transmitting processor 468, and the controller/processor 459 in Embodiment 4.

### Embodiment 13

Embodiment 13 illustrates a structural block diagram in one second node, as shown in FIG. 13. In FIG. 13, the second node 1300 comprises a first transmitter 1301 and a second transceiver 1302.

The first transmitter 1301 sends a first information block, the first information block is used for configuring a first semi-persistent transmission, and the first semi-persistent transmission corresponds to a first codeword and a second codeword;
the second transceiver 1302 sends first signaling, the first signaling is used for releasing scheduling corresponding to at least one of the first codeword and the second codeword corresponding to the first semi-persistent transmission;
in Embodiment 13, the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

As one embodiment, the PDCCH validation for the scheduling release of the codeword corresponding to the first signaling depends on at least one of a value of the first domain set in the first signaling or a value of the second domain set in the first signaling.

As one embodiment, only one of the PDCCH validation for the scheduling release of the first codeword corresponding to the first semi-persistent transmission and the PDCCH validation for the scheduling release of the second codeword corresponding to the first semi-persistent transmission is achieved; a recipient of the first signaling comprises a first node; when the PDCCH validation for the scheduling release of the first codeword corresponding to the first semi-persistent transmission is achieved, the first node validates that the first signaling is used for releasing the scheduling corresponding to the first codeword corresponding to the first semi-persistent transmission; and when the PDCCH validation for the scheduling release of the second codeword corresponding to the first semi-persistent transmission is achieved, the first node validates that the first signaling is used for releasing the scheduling corresponding to the second codeword corresponding to the first semi-persistent transmission.

As one embodiment, the first information block comprises a first information sub-block set, and the first information sub-block set is simultaneously applied to the transmission of the first codeword and the transmission of the second codeword; and the first information sub-block set comprises a first information sub-block, and the first information sub-block is used for determining one of a number of HARQ processes or resource configuration information.

As one embodiment, the first semi-persistent transmission configured by the first information block is associated with a first index; the first domain set comprises a first domain, and the second domain set comprises a second domain; and the first domain and the second domain in the first signaling are simultaneously used for determining the first index.

As one embodiment, the first semi-persistent transmission configured by the first information block is associated with a first index; the first domain set comprises a first domain, and the second domain set comprises a second domain; and only one domain of the first domain and the second domain in the first signaling is used for determining the first index.

As one embodiment, a first index set and a second index set both comprise the first index, the first index set corresponds to the transmission of the first codeword, the second index set corresponds to the transmission of the second codeword, and the first index set and the second index set are independently configured, respectively.

As one embodiment, the first node comprises:
the second transceiver for abandoning receiving at least one of a first signal and a second signal,
wherein the first semi-persistent transmission configured by the first information block comprises the first signal and the second signal, the first signal corresponds to the first codeword, and the second signal corresponds to the second codeword; a recipient of the first signaling comprises a first node; when the first signaling is used for releasing the scheduling corresponding to only the second codeword in the first codeword and the second codeword corresponding to the first semi-persistent transmission, the first node receives the first signal and abandons receiving the second signal; and when the first signaling is used for releasing the scheduling corresponding to the first codeword and the scheduling corresponding to the second codeword corresponding to the first semi-persistent transmission, the first node abandons receiving the first signal and abandons receiving the second signal.

As one embodiment, the first node comprises:
the second transceiver for abandoning sending at least one of a first signal and a second signal,
wherein the first semi-persistent transmission configured by the first information block comprises the first signal and the second signal, the first signal corresponds to the first codeword, and the second signal corresponds to the second codeword; a recipient of the first signaling comprises a first node; when the first signaling is used for releasing the scheduling corresponding to only the second codeword in the first codeword and the second codeword corresponding to the first semi-persistent transmission, the first node sends the first signal and abandons sending the second signal; and when the first signaling is used for releasing the scheduling corresponding to the first codeword and the scheduling corresponding to the second codeword corresponding to the first semi-persistent transmission, the first node abandons sending the first signal and abandons sending the second signal.

As one embodiment, the first node comprises:
the first transmitter for sending second signaling, the second signaling being used for activating the scheduling corresponding to the first codeword and the scheduling corresponding to the second codeword corresponding to the first semi-persistent transmission,
wherein the second signaling comprises a third domain and a fourth domain, the third domain included in the second signaling and one domain in the first domain set are a same type of domains, and the fourth domain included in the second signaling and one domain in the second domain set are a same type of domains; and one of the third domain or the fourth domain is used for PDCCH validation for common scheduling activation of the first codeword and the second codeword.

As one embodiment, the first transmitter 1301 comprises at least the first four of the antenna 420, the transmitting device 418, the multi-antenna transmitting processor 471, the transmitting processor 414, and the controller/processor 475 in Embodiment 4.

As one embodiment, the second transceiver 1302 comprises at least the first 6 of the antenna 420, the receiving device 418, the transmitting device 418, the multi-antenna receiving processor 472, the multi-antenna transmitting processor 471, the transmitting processor 414, the receiving processor 470, and the controller/processor 475 in Embodiment 4.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The first node in the present application includes but is not limited to a mobile phone, a tablet computer, a notebook, a network card, a low-power device, an eMTC device, an NB-IoT device, a vehicle-mounted communication device, a transportation vehicle, a vehicle, an RSU (Road Side Unit), an aircraft, an airplane, a drone, a remote-controlled aircraft and other wireless communication devices. The second node in the present application includes but is not limited to a macro cell base station, a micro cell base station, a small cell base station, a femto cell, a relay base station, an eNB, a gNB, a transmission receiving node TRP, a GNSS (Global Navigation Satellite System), a relay satellite, a satellite base station, an air base station, an RSU, a drone, a test device, for example, a transceiver or a signaling tester that simulates some functions of a base station, and other wireless communication devices.

Those skilled in the art should understand that the present invention can be implemented in other specified forms without departing from the core or basic features thereof. Therefore, the embodiments currently disclosed should be regarded to be descriptive rather than restrictive in any way. The scope of the invention is determined by the appended claims rather than the preceding description, and all changes within their equivalent meanings and areas are deemed to be included therein.

## Claims

1. A first node used for wireless communication, comprising:
a first receiver for receiving a first information block, the first information block being used for configuring a first semi-persistent transmission, and the first semi-persistent transmission corresponding to a first codeword and a second codeword; and
a first transceiver for receiving first signaling, the first signaling being used for releasing scheduling corresponding to at least one of the first codeword and the second codeword corresponding to the first semi-persistent transmission,
wherein the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

2. The first node according to claim 1, wherein PDCCH validation for scheduling release of a codeword corresponding to the first signaling depends on at least one of a value of the first domain set in the first signaling or a value of the second domain set in the first signaling.

3. The first node according to claim 1 or 2, wherein only one of the PDCCH validation for the scheduling release of the first codeword corresponding to the first semi-persistent transmission and the PDCCH validation for the scheduling release of the second codeword corresponding to the first semi-persistent transmission is achieved; when the PDCCH validation for the scheduling release of the first codeword corresponding to the first semi-persistent transmission is achieved, the first node validates that the first signaling is used for releasing scheduling corresponding to the first codeword corresponding to the first semi-persistent transmission; and when the PDCCH validation for the scheduling release of the second codeword corresponding to the first semi-persistent transmission is achieved, the first node validates that the first signaling is used for releasing scheduling corresponding to the second codeword corresponding to the first semi-persistent transmission.

4. The first node according to any one of claims 1 to 3, wherein the first information block comprises a first information sub-block set, and the first information sub-block set is simultaneously applied to a transmission of the first codeword and a transmission of the second codeword; and the first information sub-block set comprises a first information sub-block, and the first information sub-block is used for determining one of a number of HARQ processes or resource configuration information.

5. The first node according to any one of claims 1 to 4, wherein the first semi-persistent transmission configured by the first information block is associated with a first index; the first domain set comprises a first domain, and the second domain set comprises a second domain; and the first domain and the second domain in the first signaling are simultaneously used for determining the first index.

6. The first node according to any one of claims 1 to 4, wherein the first semi-persistent transmission configured by the first information block is associated with a first index; the first domain set comprises a first domain, and the second domain set comprises a second domain; and only one domain of the first domain and the second domain in the first signaling is used for determining the first index.

7. The first node according to claim 5 or 6, wherein a first index set and a second index set both comprise the first index, the first index set corresponds to the transmission of the first codeword, the second index set corresponds to the transmission of the second codeword, and the first index set and the second index set are independently configured, respectively.

8. The first node according to any one of claims 1 to 7, comprising:
the first transceiver for abandoning operating at least one of a first signal and a second signal,
wherein the operating is receiving or the operating is sending, the first semi-persistent transmission configured by the first information block comprises the first signal and the second signal, the first signal corresponds to the first codeword, and the second signal corresponds to the second codeword; when the first signaling is used for releasing scheduling corresponding to only the second codeword in the first codeword and the second codeword corresponding to the first semi-persistent transmission, the first node operates the first signal and abandons operating the second signal; and when the first signaling is used for releasing the scheduling corresponding to the first codeword and the scheduling corresponding to the second codeword corresponding to the first semi-persistent transmission, the first node abandons operating the first signal and abandons operating the second signal.

9. The first node according to any one of claims 1 to 8, comprising:
the first receiver for receiving second signaling, the second signaling being used for activating the scheduling corresponding to the first codeword and the scheduling corresponding to the second codeword corresponding to the first semi-persistent transmission,
wherein the second signaling comprises a third domain and a fourth domain, the third domain included in the second signaling and one domain in the first domain set are a same type of domains, and the fourth domain included in the second signaling and one domain in the second domain set are a same type of domains; and one of the third domain or the fourth domain is used for PDCCH validation for common scheduling activation of the first codeword and the second codeword.

10. A second node used for wireless communication, comprising:
a first transmitter for sending a first information block, the first information block being used for configuring a first semi-persistent transmission, and the first semi-persistent transmission corresponding to a first codeword and a second codeword; and
a second transceiver for sending first signaling, the first signaling being used for releasing scheduling corresponding to at least one of the first codeword and the second codeword corresponding to the first semi-persistent transmission,
wherein the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

11. A method used in a first node for wireless communication, comprising:
receiving a first information block, the first information block being used for configuring a first semi-persistent transmission, and the first semi-persistent transmission corresponding to a first codeword and a second codeword; and
receiving first signaling, the first signaling being used for releasing scheduling corresponding to at least one of the first codeword and the second codeword corresponding to the first semi-persistent transmission,
wherein the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.

12. A method used in a second node for wireless communication, comprising:
sending a first information block, the first information block being used for configuring a first semi-persistent transmission, and the first semi-persistent transmission corresponding to a first codeword and a second codeword; and
sending first signaling, the first signaling being used for releasing scheduling corresponding to at least one of the first codeword and the second codeword corresponding to the first semi-persistent transmission,
wherein the first signaling comprises a first domain set and a second domain set, the first domain set corresponds to the first codeword, and the second domain set corresponds to the second codeword; the first domain set is used for PDCCH validation for scheduling release of the first codeword; the second domain set is used for PDCCH validation for scheduling release of the second codeword; and at least one domain in the first domain set does not belong to the second domain set.
